# EUROPÄISCHE PATENTSCHRIFT

(11) **EP 2 256 377 B1**
(45) Veröffentlichungstag und Bekanntmachung des Hinweises auf die Patenterteilung: **21.12.2011**
(21) Anmeldenummer: 10163297.4
(22) Anmeldetag: 19.05.2010
(51) Int. Cl.: F16H 61/32, F16H 63/30

(54) **Wählsteller für ein automatisiertes Getriebe eines Kraftfahrzeugs**
Selector for an automated gearbox in a motor vehicle
Actionneur de passage de rapport pour une boîte de vitesse automatique d'un véhicule automobile

(30) Priorität: 28.05.2009 DE 102009026544
(43) Veröffentlichungstag der Anmeldung: 01.12.2010
(73) Patentinhaber: ZF Friedrichshafen AG, 88038 Friedrichshafen (DE)
(72) Erfinder: Heinrich, Kai, 88289, Waldburg (DE)

(56) Entgegenhaltungen:
- EP-A2- 1 406 033
- EP-A2- 1 464 877
- DE-A1- 19 842 532
- DE-B- 1 161 153

## Beschreibung

Die vorliegende Erfindung bezieht sich auf einen Wählsteller für ein automatisiertes Getriebe eines Kraftfahrzeugs gemäß dem Oberbegriff des Patentanspruchs 1.

In automatisierten Schaltgetrieben wird nach dem Stand der Technik die Gassenwahl über verschiedene Aktuatorkonzepte realisiert. Beispielsweise kann der Wählsteller elektromotorisch über Kugelumlaufspindeln, elektrohydraulisch, elektromagnetisch oder elektropneumatisch betätigbar ausgeführt sein und unmittelbar oder über ein Stellgetriebe mit der Schaltwelle in Triebverbindung stehen.

Je nach Ganganzahl im Hauptgetriebe sind mittels des Wählstellers mindestens zwei Gassen zu wählen, wobei bei einer elektromotorischen, elektrohydraulischen und elektropneumatischen Betätigung des Wählstellers eine kontinuierliche Positionierung zwischen den mechanischen Grenzen ermöglicht wird, was in der Notwendigkeit einer Wegerfassung und Positionsregelung resultiert, um die gewünschte Gasse sicher anfahren zu können.

In nachteiliger Weise sind elektropneumatisch betätigbare Wählsteller schadensanfällig; ferner sind die Herstellungs- und Montagekosten für elektromotorisch und elektrohydraulisch betätigbare Wählsteller hoch. Bei elektromagnetisch betätigbaren Wählstellern ist zudem aufgrund der physikalischen Wirkungsweise eine kontinuierliche Positionierung ohne Gegenkraft nur mit hohem konstruktiven Aufwand umsetzbar.

Aus dem Stand der Technik ist bekannt, für den Fall von zwei wählbaren Gassen einen bistabilen Umkehrhubmagneten (1/R, 2/3) zu verwenden, wobei für den Fall von drei wählbaren Gassen im Magneten eine zusätzliche Mittelposition konstruktiv vorgesehen ist, um drei Gassen (1/2, R, 3/4) anwählen zu können. In nachteiliger Weise sind mehr als drei Gassen mit einem Aktuator ähnlicher Bauart nicht anwählbar.

Aus der DE 602 07 899 T2 ist ein Schaltaktuator für ein Getriebe bekannt, welcher in einer Schaltrichtung einen Schalthebel des Getriebes betätigt, wobei der Schaltaktuator eine Arbeitsstange, die mit einem mit dem Schalthebel verbundenen Arbeitselement in Eingriff ist, ein zylindrisches festes Joch, das die Arbeitsstange umgibt und ein Paar Spulen, die an der Innenseite des festen Jochs in axialer Richtung benachbart angeordnet sind umfasst. Bei dem bekannten Schaltaktuator sind an der äußeren Umfangsfläche magnetische Bewegungsmittel angeordnet, um die Arbeitsstange axial zu bewegen, wobei die magnetischen Bewegungsmittel einen ringförmigen Permanentmagneten enthalten, der sich zusammen mit der Arbeitsstange bewegt und den beiden Spulen zugewandt ist.

Hierbei ist bekannt, den Wählaktuator über ein ansteigend gestuftes Federpaket mit unterschiedlichen Federkonstanten und eine geeignete Regelung jeweils immer bis zum Anlegepunkt der nächst höheren Feder zu stellen, um so die entsprechende Gasse zu wählen. Sobald der Elektromagnet deaktiviert wird, wirkt die gesamte Rückstellkraft des Federpaketes auf ein vorgesehenes Verriegelungsblech, was einen hohen Verschleiß zu Folge haben kann. Bei einer derartigen Konstruktion sind Wählsicherheit und die hierfür erforderliche Regelung aufwändig darstellbar; für eine vollständige Wählbewegung über vier Gassen ist ein Magneten mit einem Gesamthub in der Größenordnung von 28 mm vorgesehen, was in nachteiliger Weise in einer großen Dimensionierung des Magneten resultiert.

Aus der DE 198 42 532 A1, dass der nächstliegenden Stand der Technik repräsentiert, ist eine Schaltvorrichtung zur Betätigung von drei Schaltstangen eines mehrgängigen Wechselgetriebes bekannt, mit einem vergleichsweise geringen Bauraumbedarf und einer robusten und langlebigen Konstruktion. Die Schaltvorrichtung weist hierzu ein elektromagnetisches Stellsystem auf, mittels dessen eine Schaltwelle axial zwischen drei Positionen beweglich ist, um die zu betätigende Schaltstange auszuwählen. Dabei verfügt das Stellsystem über zwei an den Enden der Schaltwelle angeordnete Aktoren, i. e. Elektromagnete.

Der vorliegenden Erfindung liegt die Aufgabe zugrunde, einen Wählsteller für ein automatisiertes Getriebe eines Kraftfahrzeugs anzugeben, durch den die hohen Kosten sowie die Komplexität einer kontinuierlichen Positionierung vermieden werden und diskrete, rückwirkungsfrei gehaltene Positionen pro Gasse ermöglicht werden. Ferner sollen bei reduziertem Wählhub im Wählsteller und bei gleichem Wählweg an der Kulisse vier Gassen anwählbar sein.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Wählsteller für ein automatisiertes Getriebe eines Kraftfahrzeugs vorgeschlagen , der eine Wählstange und zwei mit der Wählstange wirkverbundene und als 2-Stellungsmagneten ausgeführte elektromagnetische Aktuatoren umfasst, die derart angeordnet sind, dass sich je nach Kombination der Stellungen der Aktuatoren eine von vier möglichen jeweils einer Wählgasse entsprechenden Wählstellungen ergibt. Die 2-Stellungsmagneten können insbesondere als bistabile Stellungsmagneten ausgebildet sein, um deren Energieverbrauch in den Stelllagen zu minimieren.

Durch die erfindungsgemäße Konzeption können in vorteilhafter Weise vier Wählstellungen diskret, sicher und mit geringem Ansteuer- und Regelungsaufwand angefahren werden.

Der Wählsteller umfasst eine Wählstange, wobei ein Ende der Wählstange in der Schaltvorrichtung zum Anwählen der Gassen angeordnet ist und mit einem Mitnehmer verbunden ist und wobei am anderen Ende der Wählstange ein koaxial zur Längsachse der Wählstange angeordnetes Langloch vorgesehen ist, in dem ein mit einem Stößel eines ersten elektromagnetischen Aktuators, umfassend einen 2-Stellungsmagneten, verbundener Führungsstift angeordnet ist.

Ferner ist zwischen den beiden Enden der Wählstange, vorzugsweise axial betrachtet in der Mitte der Wählstange, eine Öffnung vorgesehen ist, in der ein mit einem Stößel eines zweiten elektromagnetischen Aktuators, umfassend einen 2-Stellungsmagneten, verbundener Führungsstift angeordnet ist.

Die beiden Aktuatoren sind vorzugsweise identisch zueinander ausgeführt und gemäß einer vorteilhaften Ausführungsform der Erfindung in Bezug auf die Längsachse der Wählstange an einer Seite der Wählstange und in einer Ebene derart angeordnet, dass deren Stößel parallel zueinander angeordnet sind, wobei die der jeweiligen Stellung entsprechenden Endpositionen der Stößel in Längsrichtung der Stößel betrachtet für gleiche Stellungen gleich sind.

Hierbei ist gemäß einer besonders vorteilhaften Ausführungsform der Erfindung vorgesehen, dass bei den Wählstellungen, die den zwei mittleren Wählgassen entsprechen, die Stößel der Aktuatoren im wesentlichen senkrecht zur Wählstange angeordnet sind, wobei die Stellungen der beiden Aktuatoren jeweils gleich sind.

Zum Wählen der beiden äußeren Wählgassen weisen die beiden Aktuatoren jeweils eine entgegengesetzte Stellung auf, so dass die Wählstange mit den Stößeln der Aktuatoren einen Winkel bildet, der größer bzw. kleiner als 90° ist.

Im Rahmen einer weiteren Ausführungsform der Erfindung können die Aktuatoren in Bezug auf die Längsachse der Wählstange jeweils an gegenüberliegenden Seiten der Wählstange und in der gleichen Ebene angeordnet sein; bei dieser Anordnung wird das Ziel der Erfindung durch unterschiedliche Längen der Stößel und unterschiedliche Wege zwischen den einzelnen Stellungen der Aktuatoren erreicht.

Die Erfindung wird im Folgenden anhand der beigefügten Figuren beispielhaft näher erläutert. Es zeigen:
- Figur 1:: Eine schematische Darstellung der Anordnung der Aktua- toren und der Wählstange des erfindungsgemäßen Wähl- stellers gemäß einer bevorzugten Ausführungsform der Erfindung zur Veranschaulichung der vier erzielbaren Wählstellungen;
- Figur 2:: Eine schematische Ansicht des erfindungsgemäßen Wählstellers gemäß der bevorzugten Ausführungsform der Erfindung nach Figur 1;
- Figur 3:: Eine Tabelle zur Veranschaulichung der Stellungen der Aktuatoren, die zum Wählen einer Gasse erforderlich sind; und
- Figur 4:: Eine schematische Ansicht der Schaltzustände und der entsprechenden Bewegung der Aktuatoren zum Wählen der dritten Gasse, der vierten Gasse und der ersten Gas- se ausgehend von der zweiten Gasse.

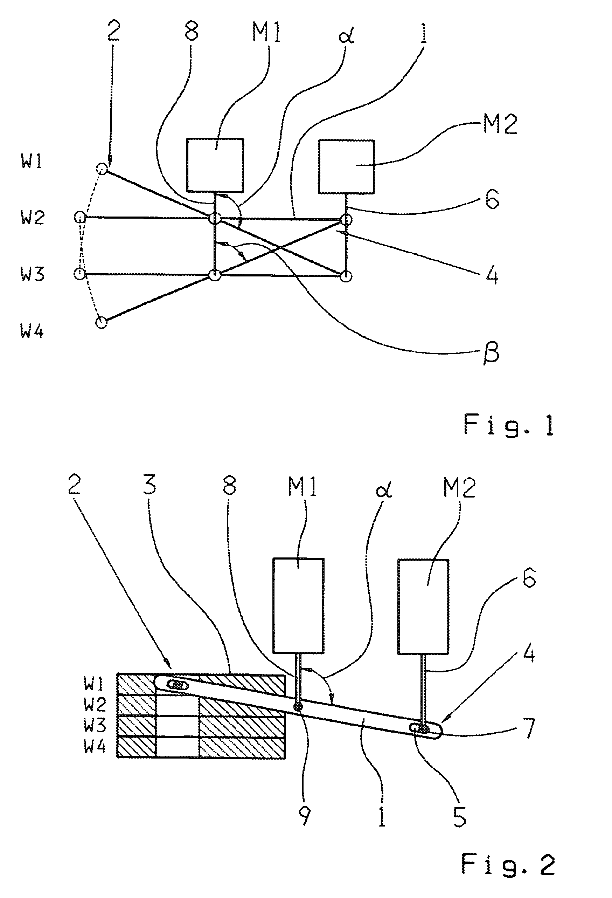

Bezugnehmend auf Figuren 1 und 2 umfasst der erfindungsgemäße Wählsteller eine Wählstange 1, wobei ein Ende 2 der Wählstange 1 in der Schaltvorrichtung 3 des Getriebes zum Anwählen der Gassen angeordnet und mit einem Mitnehmer verbunden ist und wobei am anderen Ende 4 der Wählstange 1 ein koaxial zur Längsachse der Wählstange 1 angeordnetes Langloch 5 vorgesehen ist, in dem ein mit dem Stößel 6 eines ersten als bistabiler 2-Stellungsmagnet ausgeführten elektromagnetischen Aktuators M2 verbundener Führungsstift 7 angeordnet ist.

Wie Figuren 1 und 2 zu entnehmen ist, ist axial betrachtet in der Mitte der Wählstange 1 eine Öffnung vorgesehen, in der ein mit dem Stößel 8 eines zweiten als bistabiler 2-Stellungsmagnet ausgeführten elektromagnetischen Aktuators M1 verbundener Führungsstift 9 angeordnet ist.

Die elektromagnetischen Aktuatoren M1 und M2 sind identisch ausgeführt und in Bezug auf die Längsachse der Wählstange 1 an einer Seite der Wählstange 1 und in einer Ebene derart angeordnet, dass die Stößel 6, 8 parallel zueinander angeordnet sind; ferner sind die der jeweiligen Stellung der Aktuatoren entsprechenden Endpositionen der Stößel 6, 8 in Längsrichtung der Stößel betrachtet für gleiche Stellungen gleich. Ferner sind die Stößel 8, 6 der Aktuatoren M1, M2 im Wesentlichen senkrecht zu den von den Wählgassen W1, W2, W3 und W4 definierten Ebenen angeordnet.

In Abhängigkeit von der Kombination der Stellungen der Aktuatoren M1 und M2 ergibt sich eine von vier möglichen, den Wählgassen W1, W2, W3 und W4 entsprechenden Wählstellungen, wie im Folgenden erläutert.

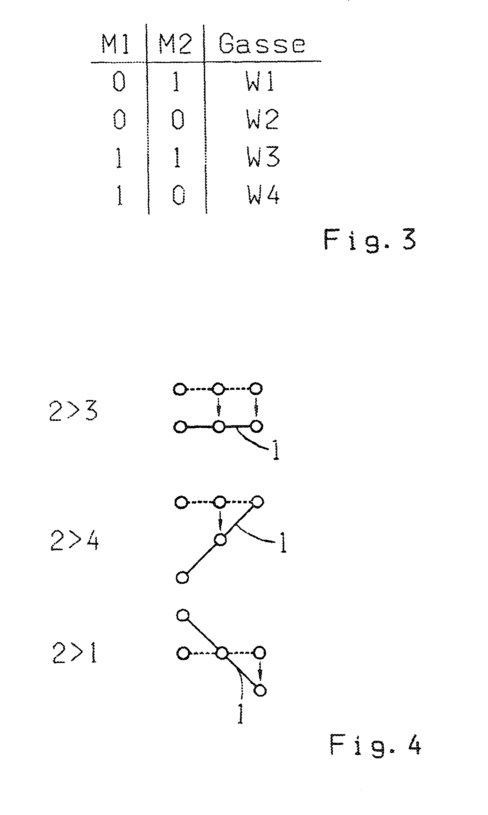

Bei der in Figur 2 gezeigten Darstellung befindet sich das Ende 2 der Wählstange 1 in der ersten Wählgasse W1. Wie aus Figur 3 ersichtlich, befindet sich hierbei der Aktuator M1 in der Stellung 0 und der Aktuator M2 in der Stellung 1. Zum Wählen der Wählgasse W2 nehmen beide Aktuatoren M1, M2 die Stellung 0 an. Ferner entspricht die Wählgasse W3 der Stellung 1 für beide Aktuatoren M1 und M2, wobei zum Wählen der Wählgasse W4 der Aktuator M1 die Stellung 1 und der Aktuator M2 die Stellung 0 annimmt.

Für die Wählstellungen, die den in Bezug auf eine parallel zu den Stößeln 8, 6 der Aktuatoren M1, M2 verlaufende Achse mittleren Gassen W2 und W3 entsprechen, sind gemäß Figur 1 die Stößel 8, 6 der Aktuatoren M1, M2 im Wesentlichen senkrecht zur Längsachse der Wählstange 1 angeordnet, wobei bei den in Bezug auf eine parallel zu den Stößeln 8, 6 der Aktuatoren M1, M2 verlaufende Achse äußeren Wählgassen W1, W4 die Wählstange 1 mit den Stößeln 8, 6 der Aktuatoren M1, M2 einen Winkel bildet, der größer bzw. kleiner als 90° ist. Der entsprechende Winkel für die Wählgasse W1 ist in Figuren 1 und 2 mit α bezeichnet und ist größer als 90°; in Figur 1 ist der Winkel zwischen den Stößeln 8, 6 der Aktuatoren M1, M2 und der Wählstange 1 mit β bezeichnet, wobei dieser Winkel kleiner als 90° ist.

Bei dem gezeigten Ausführungsbeispiel und bezugnehmend auf Figur 4 wird ausgehend von der zweiten Gasse W2 die dritte Gasse W3 durch eine Parallelverschiebung der Wählstange 1 durch Schalten der Aktuatoren von der Stellung 0 in die Stellung 1 gewählt, wobei zum Wählen der vierten Gasse W4 die Stellung des Aktuators M2 unverändert bleibt und der Aktuator M1 von der Stellung 0 in die Stellung 1 geschaltet wird. Ferner wird ausgehend von der Wählgasse W2 die Wählgasse W1 durch Schalten des Aktuators M2 von der Stellung 0 auf die Stellung 1 gewählt; die Stellung des Aktuators M1 bleibt hierbei unverändert.

### Bezugszeichen

- 1: Wählstange
- 2: Ende der Wählstange
- 3: Schaltvorrichtung
- 4: Ende der Wählstange
- 5: Langloch
- 6: Stößel
- 7: Führungsstift
- 8: Stößel
- 9: Führungsstift
- M1: zweiter Aktuator
- M2: erster Aktuator
- W1: Wählgasse
- W2: Wählgasse
- W3: Wählgasse
- W4: Wählgasse
- α: Winkel zwischen der Wählstange und den Stößeln der Aktuatoren
- β: Winkel zwischen der Wählstange und den Stößeln der Aktuatoren

## Patentansprüche

1. Wählsteller für ein automatisiertes Getriebe eines Kraftfahrzeugs, welcher eine Wählstange (1) und zwei mit der Wählstange (1) wirkverbundene und als 2-Stellungsmagneten, insbesondere als bistabile Stellungsmagneten, ausgeführte elektromagnetische Aktuatoren (M1, M2) mit positionsveränderbaren Stößeln (8, 6) umfasst, die derart angeordnet sind, dass sich je nach Kombination der Stellungen der Aktuatoren (M1, M2) eine einer Wählgasse (W1, W2, W3, 4) entsprechend Wählstellung ergibt, **dadurch gekennzeichnet, dass**
bei den Wählstellungen, die den in Bezug auf eine parallel zu den Stößeln (8, 6) der Aktuatoren (M1, M2) verlaufende Achse mittleren Wählgassen (W2, W3) entsprechen, die Stößel (8, 6) der Aktuatoren (M1, M2) im wesentlichen senkrecht zur Wählstange (1) angeordnet sind, wobei die Stellungen der beiden Aktuatoren (M1, M2) jeweils gleich sind,
wobei zum Wählen der beiden in Bezug auf eine parallel zu den Stößeln (8, 6) der Aktuatoren (M1, M2) verlaufende Achse äußeren Wählgassen (W1, W4) die Aktuatoren (M1, M2) jeweils eine entgegengesetzte Stellung aufweisen, so dass die Wählstange (1) mit den Stößeln (8, 6) der Aktuatoren (M1, M2) einen Winkel (α, β) bildet, der größer bzw. kleiner als 90° ist, wodurch je nach Kombination der Stellungen der Aktuatoren (M1, M2) eine von vier möglichen jeweils einer der Wählgassen (W1, W2, W3, W4) entsprechenden Wählstellungen einstellbar ist.

2. Wählsteller für ein automatisiertes Getriebe eines Kraftfahrzeugs, nach Anspruch 1, **dadurch gekennzeichnet, dass** ein Ende (2) der Wählstange (1) in der Schaltvorrichtung (3) des Getriebes zum Anwählen der Gassen angeordnet ist und dass am anderen Ende (4) der Wählstange (1) ein koaxial zur Längsachse der Wählstange (1) angeordnetes Langloch (5) vorgesehen ist, in dem ein mit einem Stößel (6) des ersten Aktuators (M2) verbundener Führungsstift (7) angeordnet ist, wobei zwischen den beiden Enden der Wählstange (1) eine Öffnung vorgesehen ist, in der ein mit einem Stößel (8) des zweiten Aktuators (M1) verbundener Führungsstift (9) angeordnet ist.

3. Wählsteller für ein automatisiertes Getriebe eines Kraftfahrzeugs, nach Anspruch 2, **dadurch gekennzeichnet, dass** die Aktuatoren (M1, M2) identisch zueinander ausgeführt sind und in Bezug auf die Längsachse der Wählstange (1) an einer Seite der Wählstange (1) und in einer Ebene derart angeordnet sind, dass die Stößel (8, 6) parallel zueinander und im Wesentlichen senkrecht zu den von den Wählgassen definierten Ebenen angeordnet sind, wobei die der jeweiligen Stellung entsprechenden Endpositionen der Stößel (8, 6) in Längsrichtung der Stößel betrachtet für gleiche Stellungen gleich sind.

## Claims

1. Selector controller for an automatic gearbox of a motor vehicle, said selector controller having a selector rod (1) and having two electromagnetic actuators (M1, M2) which are operatively connected to the selector rod (1) and which are designed as 2-setting magnets, in particular as bistable setting magnets, and which have plungers (8, 6) which are variable in position and which are arranged such that a selector setting corresponding to a selector gate (W1, W2, W3, W4) is obtained according to the combination of settings of the actuators (M1, M2), **characterized in that**,
in the selector settings which correspond to the middle selector gates (W2, W3) in relation to an axis running parallel to the plungers (8, 6) of the actuators (M1, M2), the plungers (8, 6) of the actuators (M1, M2) are arranged substantially perpendicular to the selector rod (1), wherein the settings of the two actuators (M1, M2) are the same in each case,
wherein to select the two outer selector gates (W1, W4) in relation to an axis running parallel to the plungers (8, 6) of the actuators (M1, M2), the actuators (M1, M2) are in each case in an opposite setting, such that the selector rod (1) forms with the plungers (8, 6) of the actuators (M1, M2) an angle (α, β) which is respectively greater than and less than 90°, as a result of which one of four possible selector settings which correspond to in each case one of the selector gates (W1, W2, W3, W4) can be set according to the combination of the settings of the actuators (M1, M2).

2. Selector controller for an automatic gearbox of a motor vehicle, according to Claim 1, **characterized in that** one end (2) of the selector rod (1) is arranged in the shift device (3) of the gearbox for selecting the gates, and **in that**, at the other end (4) of the selector rod (1), there is provided a slot (5) which is arranged coaxially with respect to the longitudinal axis of the selector rod (1) and in which is arranged a guide pin (7) which is connected to a plunger (6) of the first actuator (M2), wherein between the two ends of the selector rod (1) there is provided an opening in which is arranged a guide pin (9) which is connected to a plunger (8) of the second actuator (M1).

3. Selector controller for an automatic gearbox of a motor vehicle, according to Claim 2, **characterized in that** the actuators (M1, M2) are of identical design to one another and, in relation to the longitudinal axis of the selector rod (1), are arranged on one side of the selector rod (1) and in a plane such that the plungers (8, 6) are arranged parallel to one another and substantially perpendicular to the planes defined by the selector gates, wherein the end positions, which correspond to the respective setting, of the plungers (8, 6) as viewed in the longitudinal direction of the plungers are the same for identical settings.

## Revendications

1. Dispositif de commande de sélection pour une transmission automatique d'un véhicule automobile, qui comprend une tige de sélection (1) et deux actionneurs électromagnétiques (M1, M2) connectés fonctionnellement à la tige de sélection (1) et réalisés sous forme d'aimants à deux positions, notamment d'aimants de position bistables, avec des poussoirs de position variable (8, 6), qui sont disposés de telle sorte qu'en fonction de la combinaison de positions des actionneurs (M1, M2), on obtienne une position de sélection correspondant à une voie de sélection (W1, W2, W3, W4), **caractérisé en ce que**
dans le cas des positions de sélection qui correspondent aux voies de sélection centrale (W2, W3) par rapport à un axe s'étendant parallèlement aux poussoirs (8, 6) des actionneurs (M1, M2), les poussoirs (8, 6) des actionneurs (M1, M2) sont disposés essentiellement perpendiculairement à la tige de sélection (1), les positions des deux actionneurs (M1, M2) étant à chaque fois égales,
pour la sélection des deux voies de sélection extérieures (W1, W4) par rapport à un axe s'étendant parallèlement aux poussoirs (8, 6) des actionneurs (M1, M2), les actionneurs (M1, M2) présentent à chaque fois une position opposée, de sorte que la tige de sélection (1) forme avec les poussoirs (8, 6) des actionneurs (M1, M2) un angle (α, β) qui est supérieur ou inférieur à 90°, de sorte qu'en fonction de la combinaison des positions des actionneurs (M1, M2), une parmi quatre positions de sélection possibles correspondant à chaque fois à l'une des voies de sélection (W1, W2, W3, w4) puisse être ajustée.

2. Dispositif de commande de sélection pour une transmission automatique d'un véhicule automobile selon la revendication 1, **caractérisé en ce qu'**une extrémité (2) de la tige de sélection (1) est disposée dans le dispositif de changement de vitesse (3) de la transmission pour sélectionner les voies, et **en ce qu'**à l'autre extrémité (4) de la tige de sélection (1) est prévu un trou oblong (5) disposé coaxialement à l'axe longitudinal de la tige de sélection (1), dans lequel est disposée une goupille de guidage (7) connectée à un poussoir (6) du premier actionneur (M2), une ouverture étant prévue entre les deux extrémités de la tige de sélection (1), dans laquelle est disposée une goupille de guidage (9) connectée à un poussoir (8) du deuxième actionneur (M1).

3. Dispositif de commande de sélection pour une transmission automatique d'un véhicule automobile selon la revendication 2, **caractérisé en ce que** les actionneurs (M1, M2) sont réalisés de manière identique l'un à l'autre et sont disposés par rapport à l'axe longitudinal de la tige de sélection (1) sur un côté de la tige de sélection (1) et dans un plan de telle sorte que les poussoirs (8, 6) soient disposés parallèlement l'un à l'autre et essentiellement perpendiculairement aux plans définis par les voies de sélection, les positions d'extrémité des poussoirs (8, 6) correspondant à la position respective, considérées dans la direction longitudinale des poussoirs, étant identiques pour des positions identiques.
